# EUROPÄISCHE PATENTANMELDUNG

(11) **EP 4 792 989 A1**
(43) Veröffentlichungstag der Anmeldung: **19.08.2026**
(21) Anmeldenummer: 25157282.2
(22) Anmeldetag: 12.02.2025
(51) Int. Cl.: B25J 5/00, B25J 11/00, B25J 19/02

(54) **STEUERUNGSVERFAHREN UND BAUROBOTER**

(71) Anmelder: Hilti Aktiengesellschaft, 9494 Schaan (LI)
(72) Erfinder: Alessandretti, Andrea, 9470 Buchs (CH); Schmidt, Peer, 88131 Lindau (DE); Bralla, Dario, 9470 Buchs (CH)
(74) Vertreter: Hilti Aktiengesellschaft Corporate Intellectual Property

(57) **Zusammenfassung**

Die Erfindung betrifft ein Verfahren (1000) zur Steuerung eines Bauroboters (12), bei dem eine zumindest teiltransparente Detektionsfläche (28) mit einer Werkzeugmaschine (22) und / oder mit einem Werkzeug (24) gekoppelt ist, wobei ein Lichtpunkt (LP1, LP2, LP3) auf eine Vorderseite der Detektionsfläche (28) projiziert wird und wobei die Werkzeugmaschine (22) und / oder das Werkzeug (24) in Abhängigkeit der Position des Lichtpunkts (LP1, LP2, LP3) innerhalb der Detektionsfläche (28) gesteuert wird oder werden. Ferner betrifft die Erfindung ein Baurobotersystem (10) und einen Bauroboter (12). Sie ermöglicht einfache und kostengünstige Bauarbeiten an Decken (D).

## Beschreibung

Die vorliegende Erfindung betrifft ein Verfahren zur Steuerung eines Bauroboters, einen Bauroboter sowie ein Baurobotersystem.

### Stand der Technik

EP4403313A1 beschreibt einen Bauroboter. Der Bauroboter weist eine Fahrplattform und eine Hubvorrichtung auf. Die Fahrplattform weist mehrere Räder auf. Wenigstens eines der Räder weist eine Höhenverstellung auf, sodass eine Neigung der Fahrplattform einstellbar ist. Beispielsweise mit Hilfe einer Totalstation kann der Bauroboter positioniert werden, um an einer gewünschten Arbeitsposition ein Loch in eine Decke zu bohren.

### Offenbarung der Erfindung

Bauarbeiten weisen allgemein sehr hohe Unfallrisiken auf. Es kommt immer wieder zu schweren Unfällen, beispielsweise im Hochbau oder Tiefbau. Darüber hinaus können manche Arten von Bauarbeiten auf Dauer körperlich sehr belastend für Bauarbeiter sein. Dies betrifft beispielsweise Arbeiten an hohen Decken und allgemein Über-Kopf-Arbeiten.

Um solchen Gefahren zu begegnen sowie auch zur allgemeinen Gesundheitsprävention der Bauarbeiter kommen vermehrt Bauroboter zum Einsatz.

Gerade bei Arbeiten an Decken besteht häufig die Schwierigkeit, eine Baumaschine an eine Arbeitsposition zu steuern, an der eine Bauarbeit, beispielsweise das Bohren eines Bohrlochs, auszuführen ist.

Zwar können diese Arbeitspositionen mithilfe von beispielsweise Totalstationen präzise lokalisiert werden, allerdings lohnt sich deren Einsatz aufgrund hoher Kosten oftmals nur auf großen Baustellen mit einer entsprechend hohen Anzahl von auszuführenden Bauarbeiten. Auch besteht häufig keine Sichtverbindung zwischen einer Totalstation und einer zu markierenden Arbeitsposition.

Auch ist es schwierig, bei Decken, insbesondere in hoher Höhe, die Arbeitspositionen, an denen die Bauarbeiten ausgeführt werden sollen, an der Decke zu markieren, sodass später eine Baumaschine die gewünschte Bauarbeit an der markierten Arbeitsposition ausführen könnte. Soll beispielsweise die Markierung mit einem Stift auf die Decke aufgetragen werden, so muss eine Markierungsmaschine oder ein Bauarbeiter mit dem Stift bis zur Decke gelangen. Dies ist gerade bei hohen Decken oftmals sehr aufwendig.

Aufgabe der vorliegenden Erfindung ist es daher, Verfahren und Vorrichtungen anzubieten, mit denen auf einfache und kostengünstige Weise Bauarbeiten an Decken ausgeführt werden können.

Gelöst wird die Aufgabe durch ein Verfahren zur Steuerung eines Bauroboters, bei dem eine zumindest teiltransparente Detektionsfläche mit einer Werkzeugmaschine und / oder einem Werkzeug gekoppelt ist, wobei ein Lichtpunkt auf eine Vorderseite der Detektionsfläche projiziert wird und wobei die Werkzeugmaschine und / oder das Werkzeug in Abhängigkeit der Position des Lichtpunkts innerhalb der Detektionsfläche gesteuert wird.

Somit ist es möglich, mithilfe des Lichtpunkts eine Position auf der Detektionsfläche zu markieren. Die Position kann einer Arbeitsposition an beispielsweise einer Decke entsprechen. So kann mithilfe des Lichtpunkts bzw. eines Lasers, der den Lichtpunkt erzeugt, indirekt die Arbeitsposition markiert werden, ohne dass eine Sichtverbindung dorthin erforderlich wäre. Schon hierdurch kann die Markierung von Arbeitspositionen an beispielsweise Decken vereinfacht werden.

Der Roboter kann somit an eine Position bewegt werden, bis der Lichtpunkt die Detektionsfläche trifft und/ oder eine entsprechende Markierung an der Detektionsfläche erreicht.

Es ist auch nicht erforderlich, bis an die Decke zu gelangen, um dort beispielsweise eine Markierung mit einem Stift aufzubringen. Auch dies vereinfacht die Markierung von Arbeitspositionen.

Bei der Detektionsfläche kann es sich um eine teiltransparente Detektionsfläche oder eine transparente Detektionsfläche handeln.

Ein weiterer Gedanke der Erfindung ist es, die Detektionsfläche wenigstens teiltransparent auszuführen. Der Lichtpunkt wird auf die Vorderseite der Detektionsfläche projiziert. Durch die zumindest teilweise Transparenz der Detektionsfläche ist er auch von einer der Vorderseite gegenüberliegenden Rückseite aus sichtbar. Die Position des Lichtpunkts innerhalb der Detektionsfläche ist somit detektierbar, ohne dass die Vorderseite von einem Sensor oder dergleichen teilweise oder vollständig verdeckt werden bräuchte.

Die Detektionsfläche kann Teil eines Detektors sein, vorzugsweise integraler Bestandteil des Detektors. In einer Ausgestaltung ist die Detektionsfläche zum Detektor, z. B. Kamera, separat. Dabei kann eine Detektionsfläche beispielsweise am Bauroboter bereitgestellt werden, insbesondere an einer dafür vorgesehenen Halterung oder an einem dafür vorgesehenen Rahmen fixiert werden.

Von der Rückseite aus kann der Verlauf des Lichtstrahls, der den Lichtpunkt erzeugt, scheinbar fortgesetzt werden, sodass ein scheinbarer Auftreffpunkt des Lichtstrahls auf der Decke als Arbeitsposition definiert werden kann. Einem Benutzer kann somit der Eindruck vermittelt werden, er würde die Arbeitsposition mithilfe des Lichtstrahls an der Decke markieren, indem er den Lichtstrahl auf die Detektionsfläche richtet. Eine Sichtverbindung zur Decke, insbesondere zur Arbeitsposition, ist dabei nicht erforderlich. Insgesamt ergibt sich für den Benutzer ein besonders intuitives Vorgehen zur Markierung der Arbeitsposition an der Decke.

Da für dieses Verfahren grundsätzlich keine Totalstation oder dergleichen erforderlich ist, können die Kosten für eine solche, zumindest teilweise, eingespart werden, wodurch das Verfahren auch besonders kostengünstig durchgeführt werden kann.

Die Detektionsfläche kann als Diffusor ausgeführt sein. Beispielsweise kann die Detektionsfläche ein Milchglas oder dergleichen umfassen. Dadurch lässt sich der Lichtpunkt von der Vorderseite aus besonders gut erkennen.

Die Position des Lichtpunkts auf der Detektionsfläche kann mithilfe einer Kamera, insbesondere von der Rückseite aus, detektiert werden. Dies kann kostengünstiger sein, als wenn die Detektionsfläche beispielsweise mit einem Flächensensor ausgestattet wäre.

Die Detektionsfläche kann vorzugsweise beabstandet vom Werkzeug, insbesondere von einer Spitze des Werkzeugs, angeordnet sein. Sie kann sich beispielsweise deutlich unterhalb der Werkzeugspitze befinden. So kann eine Sichtverbindung zur Detektionsfläche auch dann noch bestehen, wenn die Arbeitsposition an der Decke, beispielsweise durch benachbarte Installationselemente, verdeckt ist.

Durch den Abstand zwischen der Detektionsfläche und dem Werkzeug oder der Werkzeugspitze kann es jedoch zu einem Versatz kommen zwischen der aufgrund der Position des Lichtpunkts auf der Detektionsfläche ermittelten Arbeitsposition und einer tatsächlichen Soll-Arbeitsposition. Um diesen Versatz zu kompensieren, kann ein Neigungswinkel des Bauroboters, insbesondere einer Hubvorrichtung des Bauroboters, der Werkzeugmaschine und / oder des Werkzeugs, gemessen werden. Der Neigungswinkel kann dann durch Verstellen des Bauroboters, insbesondere der Hubvorrichtung, eines Armes des Bauroboters und / oder der Werkzeugmaschine, kompensiert werden.

So lässt sich die Präzision der Ermittlung der Arbeitsposition an der Decke und damit insgesamt die Präzision, mit der Bauarbeiten an Decken ausgeführt werden können, verbessern. Eigene Untersuchungen ergaben, dass der Positionsfehler auf unter 2 mm gesenkt werden kann.

Denkbar ist insbesondere, dass der Lichtpunkt von einem Vertikallinienlaser erzeugt wird. Der Vertikallinienlaser kann ein einstrahliger Laser sein, er kann auch ein mehrstrahliger Laser sein, beispielsweise ein Kreuzlinienlaser.

Der Vertikallinienlaser kann eine Wasserwaage und / oder eine Libelle umfassen, um seine exakt vertikale Ausrichtung sicherzustellen. Die Wasserwaage kann analog und / oder digital ausgebildet sein. Der Vertikallinienlaser kann somit einen vertikalen Lichtstrahl erzeugen. Somit kann der Benutzer beispielsweise ausgehend von einer Markierung, beispielsweise einem Punkt, auf einem Boden, auf dem sich der Bauroboter befindet, die Arbeitsposition an der Decke intuitiv markieren.

Denkbar ist beispielsweise, dass der Benutzer zunächst die Arbeitsposition an der Decke mithilfe des Vertikallinienlaser markiert. Anschließend bringt er den Bauroboter in die Nähe, bis der Vertikallinienlaser nicht mehr mit seinem Laserstrahl die Decke erreicht, sondern einen Lichtpunkt auf der Detektionsfläche des Bauroboters markiert. Der Bauroboter kann dann aus der Position des Lichtpunkts auf der Detektionsfläche wiederum zurück schließen auf die zu bearbeitende Arbeitsposition. Die Bauarbeit kann dann an der so ermittelten Arbeitsposition ausgeführt werden, selbst wenn der Bauroboter die Arbeitsposition während der Ausführung der Bauarbeiten überdeckt und somit der Lichtstrahl nicht mehr die Decke erreichen kann.

Häufig werden auch Arbeitspositionen an Decken zunächst auf Böden markiert. Mithilfe des Vertikallinienlaser ist es dann möglich, die Markierung auf dem Boden anzupeilen und dann durch die Verlängerung des Lichtstrahls durch den Vertikallinienlaser diese Markierung vertikal auf die Decke zu übertragen. Auch dadurch ergibt sich eine sehr einfache Möglichkeit für den Benutzer, Arbeitspositionen an der Decke für den Bauroboter zu markieren. Diese Vorgehensweise ist auch für den Benutzer besonders intuitiv. Belastungen des Benutzers werden vermieden, da lediglich Punkte auf dem Boden zu markieren sind.

Über-Kopf-Arbeiten und/ oder Arbeiten in großer Höhe, beispielsweise in 5m Höhe, z. B. zur Markierung von Arbeitspositionen an Decken können somit vermieden werden.

Aus Sicherheitsgesichtspunkten kann vorgesehen sein, dass die Bauarbeit nur so lange ausgeführt wird, solange ein die Ausführung steuerndes Betätigungselement betätigt wird. Das Betätigungselement kann beispielsweise ein Taster sein. Somit ergibt sich eine Not-Aus-Funktion, bei der der Benutzer des Bauroboters lediglich das Betätigungselement loslassen braucht, um den Bauroboter zu stoppen.

Denkbar ist, dass der Bauroboter vorab so manuell positioniert wird, dass der Lichtpunkt auf die Detektionsfläche trifft. Der Benutzer kann somit den Bauroboter vorab grob positionieren. Eine Feinpositionierung ist nicht erforderlich. Es genügt, wenn der Lichtpunkt die Detektionsfläche trifft. Im Gegenzug kann bei dem Bauroboter auf eine komplexe Hardware und Software zur autonomen oder semiautonomen Grobpositionierung verzichtet werden. Beispielsweise kann auf umfangreiche Schutzvorrichtungen verzichtet werden, wenn ausschließlich der Benutzer den Bauroboter verlagert. Auch Absturzsicherungen können sich erübrigen. Dadurch lassen sich die Herstellungskosten für den Bauroboter erheblich senken.

In den Rahmen der Erfindung fällt des Weiteren ein Bauroboter, der vorzugsweise eingerichtet sein kann zur Verwendung in dem vorangehend beschriebenen Verfahren. Der Bauroboter weist eine Fahrplattform und eine Hubvorrichtung auf. Ferner weist der Bauroboter eine zumindest teiltransparente Detektionsfläche auf, die mit einer Werkzeugmaschine und / oder einem Werkzeug gekoppelt ist.

Auf die Detektionsfläche kann ein Lichtstrahl gerichtet werden. Der entstehende Lichtpunkt auf der Detektionsfläche kann eine Arbeitsposition, beispielsweise an einer Decke, implizit markieren. Der Bauroboter kann die Position des Lichtpunkts auf der Detektionsfläche ermitteln. Er kann seine Werkzeugmaschine und / oder das Werkzeug entsprechend der Position an beispielsweise der Decke positionieren und dort eine Bauarbeit ausführen. Dadurch gestaltet sich die Nutzung für den Benutzer des Bauroboters besonders einfach. Der Bauroboter kann insgesamt wenig komplex aufgebaut sein, sodass er sich kostengünstig herstellen lässt. Insgesamt können somit Bauarbeiten kostengünstig und einfach ausgeführt werden.

Die Detektionsfläche ist mit der Werkzeugmaschine und / oder dem Werkzeug gekoppelt. Die Detektionsfläche kann somit mit der Werkzeugmaschine und / oder dem Werkzeug mitbewegt werden. Somit kann, beispielsweise während einer Bewegung der Werkzeugmaschine, die Position des Lichtpunkts innerhalb der Detektionsfläche vom Bauroboter überwacht werden. Mithilfe dieser Überwachung kann die Werkzeugmaschine und / oder das Werkzeug auf einfache Weise zur Arbeitsposition gesteuert werden. Auch kann während der Ausführung einer Bauarbeit überwacht werden, ob sich die Werkzeugmaschine und / oder das Werkzeug noch an der geplanten Arbeitsposition befindet.

Die Fahrplattform kann wenigstens ein Rad mit einer Höhenverstellung aufweisen. Mithilfe der Höhenverstellung kann der Bauroboter einen Neigungswinkel einstellen. Beispielsweise kann er einen Gierwinkel und / oder einen Rollwinkel einstellen. Es können kostengünstigere Räder verwendet werden. Beispielsweise kann auf omnidirektionale Räder verzichtet werden. Bei der Feinpositionierung kann auf Rangierbewegungen verzichtet werden. Abrieb der Räder kann reduziert werden. Die Lebensdauer des Bauroboters, insbesondere von Verschleißteilen, beispielsweise die Räder, kann verlängert werden.

Zur Detektion seines Neigungswinkels kann der Bauroboter einen Neigungssensor aufweisen. Der Neigungssensor kann insbesondere an der Hubvorrichtung und / oder in der Nähe der Werkzeugmaschine angeordnet sein.

Der Bauroboter kann einen Dreharm aufweisen. Der Dreharm kann eingerichtet sein, sich um eine vertikale Z-Achse des Bauroboters, insbesondere um eine Längsrichtung seiner Hubvorrichtung, zu rotieren. Der Dreharm kann zusätzlich längenverstellbar sein. Somit kann der Bauroboter nach Art eines Scararoboters mit wenigstens zwei Freiheitsgraden ausgebildet sein. Vorzugsweise kann der Bauroboter wenigstens die zwei Freiheitsgrade des Dreharms sowie weitere Freiheitsgrade aufgrund der Höhenverstellung der Fahrplattform aufweisen.

Auch die Hubvorrichtung kann einen zusätzlichen Freiheitsgrad, insbesondere in einer vertikalen oder zumindest im Wesentlichen vertikalen Richtung, liefern. Ferner ist denkbar, dass der Bauroboter eingerichtet ist, einen auf eine Vorderseite der Detektionsfläche fallenden Lichtpunkt von einer der Vorderseite gegenüberliegenden Rückseite zu detektieren. Dies ermöglicht eine verschattungsfreie Detektion der Position des Lichtpunkts auf der Detektionsfläche durch den Bauroboter.

In den Rahmen der Erfindung fällt ferner ein Baurobotersystem, umfassend einen Bauroboter der vorangehend beschriebenen Art sowie einen Vertikallinienlaser. Der Vertikallinienlaser kann auf einem Stativ, beispielsweise einem Tripod, angeordnet sein. Ein solches Baurobotersystem kann aufgrund seiner einfachen Struktur kostengünstig hergestellt werden. Es ist durch einen Benutzer intuitiv und damit einfach bedienbar. So kann der Benutzer beispielsweise mithilfe des Vertikallinienlaser einen Punkt auf einem Boden einer Baustelle anpeilen und den Bauroboter manuell so in die Nähe des Vertikallinienlaser bringen, dass seine Detektionsfläche vom Vertikallinienlaser getroffen wird. Anschließend kann er den Bauroboter mithilfe des Betätigungselements starten, wodurch der Bauroboter sein Werkzeug vertikal oberhalb des Punktes auf dem Boden zu einer gegenüberliegenden Decke bewegen kann und dort eine Bauarbeit ausführen kann.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein. In der schematischen Zeichnung sind Ausführungsbeispiele der Erfindung dargestellt, welche in der nachfolgenden Beschreibung näher erläutert werden.

### Kurze Beschreibung der Zeichnungen

Es zeigen:
- Fig. 1: ein Baurobotersystem mit einem Bauroboter und einem Vertikallinienlaser,
- Fig. 2: eine schematische Darstellung eines Positionsfehlers und
- Fig. 3: ein Verfahren zur Steuerung eines Bauroboters.

Zur Erleichterung des Verständnisses der Erfindung werden in der nachfolgenden Figurenbeschreibung für sich entsprechende Elemente jeweils die gleichen Bezugszeichen verwendet.

### Ausführungsformen der Erfindung

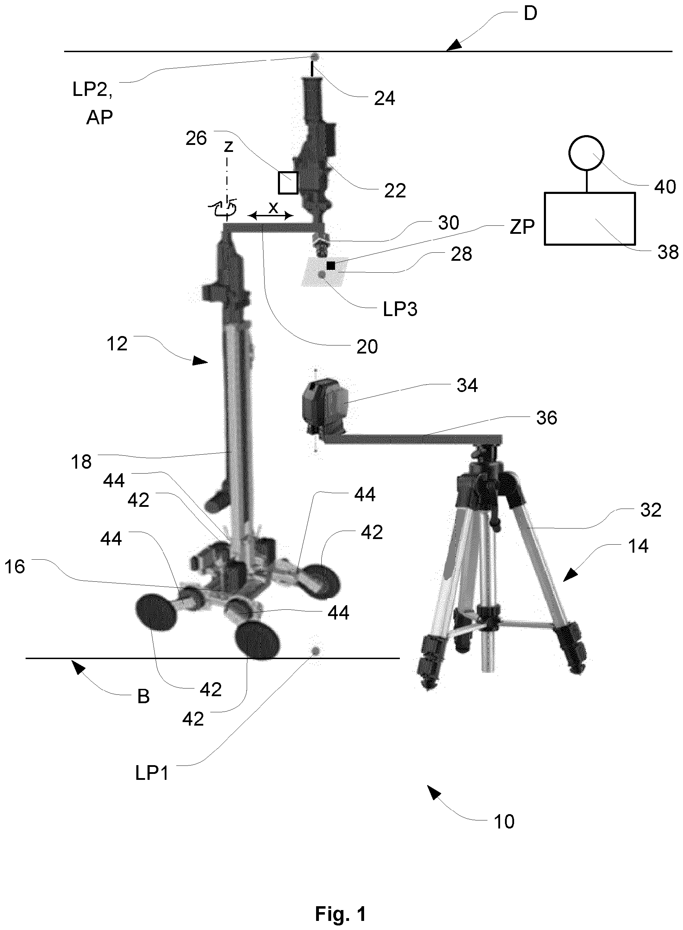

Fig. 1 zeigt ein Baurobotersystem 10 mit einem Bauroboter 12 und einer Laservorrichtung 14.

Beispielhaft sei angenommen, dass mit dem Baurobotersystem 10 vertikal oberhalb eines Punktes LP1 auf einem Boden B an einer Decke D eine Arbeitsposition AP sei. An dieser Arbeitsposition AP soll in die Decke D ein Bohrloch gebohrt werden.

Der Bauroboter 12 weist eine Fahrplattform 16 auf, auf der eine Hubvorrichtung 18 angeordnet ist. An ihrem freien Ende weist die Hubvorrichtung 18 einen Dreharm 20 auf, an dem eine Werkzeugmaschine 22 mit einem Werkzeug 24 montiert ist.

Die Hubvorrichtung 18 kann längs ausgefahren werden, sodass die Werkzeugmaschine 22 mit ihrem Werkzeug 24 in der Höhe verstellt werden kann.

Der Dreharm 20 ist motorisch drehbar um eine Drehachse Z um die Hubvorrichtung 18 gelagert. Weiter weist der Dreharm 20 einen Linearantrieb auf, um seine Länge entlang einer Achse X und damit den Radialabstand des Werkzeugs 24 von der Drehachse Z, einzustellen.

Die Werkzeugmaschine 22 ist in diesem Ausführungsbeispiel als Bohrhammermaschine ausgebildet. Das Werkzeug 24 ist ein für die Decke D geeigneter Gesteinsbohrer.

Neigungswinkel gegenüber der Vertikalen, insbesondere der Schwerkraftrichtung, können mit einem Neigungssensor 26 detektiert werden.

Unterseitig, insbesondere auf einer der Werkzeugmaschine 22 gegenüberliegenden Seite, weist der Dreharm 20 eine Detektionsfläche 28 auf. Die Detektionsfläche 28 ist im vorliegenden Ausführungsbeispiel aus Milchglas gebildet und dadurch teiltransparent, insbesondere transluzent. Zwischen dem Dreharm 20 und der Detektionsfläche 28 befindet sich eine Kamera 30, mit der eine Rückseite der Detektionsfläche 28 aufgenommen und analysiert werden kann.

Die Detektionsfläche 28 kann beispielsweise eine Größe von 15 X 15 cm² aufweisen.

Die Laservorrichtung 15 umfasst ein Stativ 32 mit einem Vertikallinienlaser 34. Der Vertikallinienlaser 34 ist über einen Stativarm 36 seitlich am übrigen Stativ 32 angeordnet.

Der Vertikallinienlaser 34 ist eingerichtet, sowohl nach unten als auch nach oben zu strahlen. Sein nach unten gerichteter Lichtstrahl trifft den Boden B am Punkt LP1.

Ohne den Bauroboter 12 würde sein nach oben gerichteter Lichtstrahl an der Arbeitsposition AP unmittelbar an der Decke D auftreffen. Dies ist symbolisch in Fig. 1 dargestellt, in dem die Arbeitsposition AP zusätzlich mit dem Bezugszeichen LP2 markiert ist.

In der in Fig. 1 dargestellten Situation allerdings befindet sich der Bauroboter 12 im Strahlbereich der Laservorrichtung 14. Somit verschattet der Bauroboter 12 den nach oben gerichteten Lichtstrahl, sodass dieser nicht auf die Arbeitsposition AP auftreffen kann. Jedoch trifft der nach oben gerichtete Lichtstrahl auf die Detektionsfläche 28 auf, auf der er sowohl auf einer Vorderseite der Detektionsfläche 28 als auch auf der Rückseite einen Lichtpunkt LP3 generiert.

Der Bauroboter 12 ist eingerichtet, die Detektionsfläche 28 derart zu verlagern, bis der von der Kamera 30 von der Rückseite aus detektierte Lichtpunkt LP3 auf einem Zielpunkt ZP zu liegen kommt.

Da die Werkzeugmaschine 22 mit ihrem Werkzeug 24 mit der Detektionsfläche 28 gekoppelt ist, bewegt sich Erstere bei Bewegungen der Letzteren entsprechend mit.

Die Detektionsfläche 28 kann mithilfe des entlang der Achse X verstellbaren drehbaren Arms 20 sowie durch Rotation um die Drehachse Z bewegt werden.

Außerdem weisen Räder 42 der Fahrplattform 16 Höhenverstellungen 44 auf.

Mit den Höhenverstellungen 44 lässt sich die Fahrplattform 16 und damit die Hubvorrichtung 18 mit den an ihr montierten Komponenten in unterschiedliche Richtungen neigen. Insbesondere kann der Neigungswinkel motorisch eingestellt werden. Dadurch ergeben sich zusätzliche Möglichkeiten, die Detektionsfläche 28 und damit auch die Werkzeugmaschine 22 mit ihrem Werkzeug 24 zu positionieren.

Durch diese zusätzlichen Möglichkeiten lassen sich einerseits Unebenheiten des Bodens B ausgleichen. Darüber hinaus kann das Werkzeug 24 zumindest in einem begrenzten Umfang verlagert werden, ohne die Fahrplattform 16 insgesamt zu bewegen. Auch kann dadurch die Mechanik des Dreharms 20, insbesondere seine motorische Lagerung um die Drehachse Z, kostengünstig ausgebildet sein.

Insbesondere benötigt eine motorische Einstellung des Dreharms 20 um die Drehachse Z nur eine geringe Präzision.

Sobald der Lichtpunkt LP3 den Zielpunkt ZP erreicht hat, kann die Werkzeugmaschine 22 vertikal oder zumindest im Wesentlichen vertikal gegen die Decke D bewegt werden, um dort die vorgesehene Bauarbeit an der Arbeitsposition AP, in diesem Beispiel das Bohren eines Bohrlochs, auszuführen.

Um den Vorgang zu starten oder zu stoppen, ist eine Fernbedienung 38 zur Fernbedienung des Bauroboters 12 vorgesehen. Die Fernbedienung 38 weist ein Betätigungselement 40 auf. Das Betätigungselement 40 kann als monostabiler Taster ausgebildet sein. Dabei ist der Bauroboter 12 eingerichtet, sich nur dann zu bewegen, wenn das Betätigungselement 40 betätigt wird.

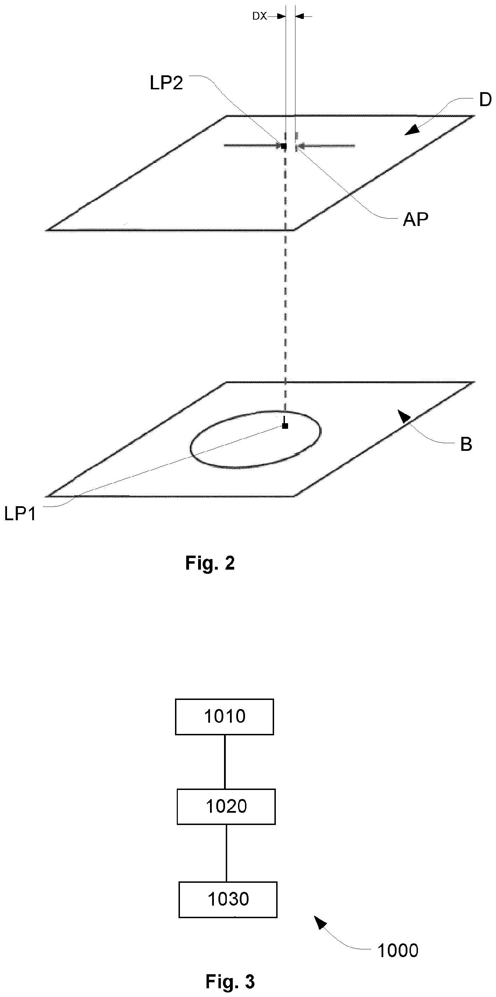

Fig. 2 zeigt in einer schematischen Darstellung, dass die so ermittelte Arbeitsposition AP von der ursprünglichen Position des Lichtpunktes LP2, d.h. bei Abwesenheit des Bauroboters 12, um einen Positionsfehler DX abweichen kann.

Dieser Positionsfehler DX kann insbesondere durch eine Schrägstellung der Werkzeugmaschine 22 gegenüber der Vertikalen in Verbindung mit dem Abstand zwischen der Detektionsfläche 28 und dem Werkzeug 24, der beispielsweise im Bereich von 30 bis 60 cm liegen kann, entstehen.

Daher ist der Bauroboter 12 eingerichtet, eine solche Schrägstellung mithilfe seines Neigungssensors 26 zu detektieren. Zur Kompensation kann der Bauroboter 12 eine entsprechend der Neigung modifizierte Zielposition ZP bestimmen und sich dann derart ausrichten, dass der Lichtpunkt LP3 auf dieser modifizierten Zielposition ZP zu liegen kommt. Alternativ oder ergänzend kann der Bauroboter 12 auch eingerichtet sein, sich, beispielsweise mithilfe der Höhenverstellungen 44, entsprechend zu neigen, bis der Positionsfehler DX kompensiert ist.

Fig. 3 zeigt abschließend ein Verfahren 1000 zur Steuerung eines Bauroboters.

Zur Erleichterung des Verständnisses wird das Verfahren 1000 anhand der vorangehend eingeführten Elemente und deren Bezugszeichen näher erläutert.

Weiter wird beispielhaft davon ausgegangen, dass auf dem Boden B eine Markierung vorhanden ist, über der in vertikaler Richtung in der gegenüberliegenden Decke D ein Bohrloch gebohrt werden soll.

In einem Schritt 1010 wird die Laservorrichtung 14 mit dem Vertikallinienlaser 34 so positioniert, dass der nach unten gerichtete Lichtstrahl des Vertikallinienlasers 34 mit seinem Lichtpunkt LP1 die Markierung auf dem Boden B betrifft.

In einem Schritt 1020 wird der Bauroboter 12 von einem Benutzer in die Nähe der Laservorrichtung 14 gebracht. Er wird so positioniert, dass der nach oben gerichtete Lichtstrahl des Vertikallinienlasers 34 auf die Detektionsfläche 28 des Bauroboters 12 trifft.

Der Benutzer betätigt in einem Schritt 1030 das Betätigungselement 40, um den Bauroboter 12 in Betrieb zu nehmen.

Der Bauroboter 12 ermittelt mithilfe seiner Kamera 30 die Position des Lichtpunkts LP3 innerhalb der Detektionsfläche 28. Zusätzlich misst er mithilfe des Neigungssensors 26 Neigungswinkel gegenüber der Vertikalen.

Sofern eine Abweichung von der Vertikalen detektiert wird, kompensiert der Bauroboter diese Neigung, insbesondere der Werkzeugmaschine 22 und des Werkzeugs 24, mithilfe der Höhenverstellungen 44, bis sich die Spitze des Werkzeugs 24 vertikal über dem Zielpunkt ZP befindet.

Durch Anpassung seines Dreharms 20 in radialer Richtung, insbesondere entlang der Achse X, durch Drehen um die Drehachse Z und / oder durch Verstellen der Fahrplattform 16 manövriert der Bauroboter 12 den Zielpunkt ZP zum Lichtpunkt LP3. Die dadurch mitbewegte Werkzeugmaschine 22 und ihr Werkzeug 24 werden somit in Abhängigkeit der Position des Lichtpunkts LP3 innerhalb der Detektionsfläche 28 gesteuert.

Durch Ausfahren der Hubvorrichtung 18 nähert der Bauroboter 12 das Werkzeug 24 der Decke D an und bohrt mithilfe der Werkzeugmaschine 22 bei Kontakt mit der Decke D in diese das gewünschte Bohrloch.

Während die Hubvorrichtung 18 ausgefahren wird sowie während des übrigen Bohrvorganges kontrolliert und kompensiert gegebenenfalls der Bauroboter 12 kontinuierlich seine Neigungswinkel gegenüber der Vertikalen.

Nach Abschluss der Bauarbeit, also des Bohrens des Bohrlochs, fährt der Bauroboter 12 das Werkzeug 24 aus dem gebohrten Bohrloch und beendet seine Tätigkeit.

Würde der Benutzer das Betätigungselement 40 während der Ausführung der Bauarbeit loslassen, so würde der Bauroboter 12 seine Tätigkeit unterbrechen.

Beispielhaft ist in den vorangehend beschriebenen Ausführungsbeispielen der Bauroboter 12 als Bohrroboter ausgebildet. Bei alternativen Ausführungsformen kann der Bauroboter 12 auch zur Ausführung anderer Bauaufgaben, beispielsweise zum Trennen, Schleifen und / oder Messen ausgebildet sein. Dazu kann die Werkzeugmaschine 22 mit ihrem Werkzeug 24 jeweils entsprechend, beispielsweise als Sägemaschine, Schleifmaschine und / oder Laserdistanzmesser, ausgebildet sein.

### Bezugszeichenliste

- 10: Baurobotersystem
- 12: Bauroboter
- 14: Laservorrichtung
- 16: Fahrplattform
- 18: Hubvorrichtung
- 20: Dreharm
- 22: Werkzeugmaschine
- 24: Werkzeug
- 26: Neigungssensor
- 28: Detektionsfläche
- 30: Kamera
- 32: Stativ
- 34: Vertikallinienlaser
- 36: Stativarm
- 38: Fernbedienung
- 40: Betätigungselement
- 42: Rad
- 44: Höhenverstellung
- AP: Arbeitsposition
- B: Boden
- D: Decke
- DX: Positionsfehler
- LP1: Lichtpunkt
- LP2: Lichtpunkt
- LP3: Lichtpunkt
- X: Achse
- Z: Drehachse
- ZP: Zielpunkt
- 1000: Verfahren
- 1010: Schritt
- 1020: Schritt
- 1030: Schritt

## Patentansprüche

1. Verfahren (1000) zur Steuerung eines Bauroboters (12), bei dem eine zumindest teiltransparente Detektionsfläche (28) mit einer Werkzeugmaschine (22) und / oder mit einem Werkzeug (24) gekoppelt ist, wobei ein Lichtpunkt (LP1, LP2, LP3) auf eine Vorderseite der Detektionsfläche (28) projiziert wird und wobei die Werkzeugmaschine (22) und / oder das Werkzeug (24) in Abhängigkeit der Position des Lichtpunkts (LP1, LP2, LP3) innerhalb der Detektionsfläche (28) gesteuert wird oder werden.

2. Verfahren (1000) nach dem vorhergehenden Patentanspruch, **dadurch gekennzeichnet, dass** die Position des Lichtpunkts (LP3) auf der Detektionsfläche (28) mithilfe einer Kamera (30), insbesondere von einer der Vorderseite gegenüberliegenden Rückseite aus, detektiert wird.

3. Verfahren (1000) nach Anspruch 2, **dadurch gekennzeichnet, dass** die Detektionsfläche (28) zur Kamera (30) separat angeordnet ist.

4. Verfahren (1000) nach einem der vorhergehenden Patentansprüche, **dadurch gekennzeichnet, dass** ein Neigungswinkel des Bauroboters (12), insbesondere einer Hubvorrichtung (18) des Bauroboters (12), der Werkzeugmaschine (22) und / oder des Werkzeugs, gemessen wird.

5. Verfahren (1000) nach einem der vorhergehenden Patentansprüche, **dadurch gekennzeichnet, dass** der Lichtpunkt (LP3) von einem Vertikallinienlaser (34) erzeugt wird.

6. Verfahren (1000) nach einem der vorhergehenden Patentansprüche, **dadurch gekennzeichnet, dass** eine Bauarbeit nur so lange ausgeführt wird, solange ein die Ausführung steuerndes Betätigungselement (40) betätigt wird.

7. Verfahren (1000) nach einem der vorhergehenden Patentansprüche, **dadurch gekennzeichnet, dass** der Bauroboter (12) manuell so positioniert wird, dass der Lichtpunkt (LP3) auf die Detektionsfläche (28) trifft.

8. Bauroboter (12), insbesondere zur Verwendung in einem Verfahren (1000) nach einem der vorhergehenden Patentansprüche,
- wobei der Bauroboter (12) eine Fahrplattform (16) und eine Hubvorrichtung (18) aufweist, und
- wobei der Bauroboter (12) eine teiltransparente Detektionsfläche (28) aufweist, die mit einer Werkzeugmaschine (22) und / oder einem Werkzeug (24) gekoppelt ist.

9. Bauroboter (12) nach dem vorherigen Patentanspruch, **dadurch gekennzeichnet, dass** die Fahrplattform (16) wenigstens ein Rad (42) mit einer Höhenverstellung (44) aufweist.

10. Bauroboter (12) nach einem der Patentansprüche 8 oder 9, **dadurch gekennzeichnet, dass** der Bauroboter (12), insbesondere die Hubvorrichtung (18), einen Neigungssensor (26) aufweist.

11. Bauroboter (12) nach einem der Patentanspruch 8 bis 10, **dadurch gekennzeichnet, dass** der Bauroboter (12) einen Dreharm (20) aufweist.

12. Bauroboter (12) nach einem der Patentanspruch 8 bis 11, **dadurch gekennzeichnet, dass** der Bauroboter (12) eingerichtet ist, einen auf eine Vorderseite der Detektionsfläche (28) fallenden Lichtpunkt (LP1, LP2, LP3) von einer der Vorderseite gegenüberliegenden Rückseite zu detektieren.

13. Baurobotersystem (10), umfassend einen Bauroboter (12) nach einem der Patentansprüche 7 bis 11 und einen Vertikallinienlaser (34), der auf einem Stativ (32), beispielsweise einem Tripod, angeordnet ist.
